# EUROPÄISCHE PATENTSCHRIFT

(11) **EP 2 522 593 B1**
(45) Veröffentlichungstag und Bekanntmachung des Hinweises auf die Patenterteilung: **21.10.2015**
(21) Anmeldenummer: 12165158.2
(22) Anmeldetag: 23.04.2012
(51) Int. Cl.: B65D 65/12, B65D 75/10, B65D 75/12, B65D 75/16, B65D 75/26, B32B 3/28, B32B 3/30, B32B 27/32

(54) **Folienmaterial zur Herstellung einer Verpackung sowie Verfahren zur Herstellung und Verwendung**
Film material for producing packaging and method for producing and use
Matériau en feuille pour la fabrication d'un emballage ainsi que procédé de fabrication et d'utilisation

(30) Priorität: 09.05.2011 DE 102011050221
(43) Veröffentlichungstag der Anmeldung: 14.11.2012
(73) Patentinhaber: Huhtamaki Flexible Packaging Germany GmbH & Co. KG, 87671 Ronsberg (DE)
(72) Erfinder: Daelmans, Eddy, 3650 Dilsen-Stokkem (BE); Schneider, Arnold, Dr., 87437 Kempten (DE); Schrägle, Matthias, 87452 Altusried (DE)
(74) Vertreter: Popp, Eugen

(56) Entgegenhaltungen:
- EP-A1- 1 849 579
- EP-A1- 2 360 099
- DE-A1- 4 237 795
- DE-A1-102006 027 004
- DE-T2- 69 130 096
- GB-A- 2 036 683
- JP-A- 2004 025 704
- US-A1- 2010 290 723

## Beschreibung

Die Erfindung betrifft ein Folienmaterial zur Herstellung einer Verpackung sowie ein Verfahren zu dessen Herstellung und Verwendung gemäß den Oberbegriffen der Patentansprüche 1, 13 und 14.

Folien zur Herstellung von Verpackungen sind seit langer Zeit bekannt und werden in nahezu allen Bereichen der Verpackungsindustrie verwendet.

Ein Problem bislang bekannter Folien, zu welchen sowohl Monofolien als auch Laminate zu zählen sind, besteht jedoch darin, dass bislang bekannte Folienmaterialien, anders als beispielsweise Papier oder Karton, widerstandsfähig gegenüber einem Falten oder Verdrehen sind, da bislang bekannte Follenmateriallen ein hohes Rückstellvermögen, d.h. einen Drang zur Wiedererlangung der ursprünglichen Form haben. So ist es einer herkömmlichen flächigen Folie oder einem solchen flächigen Laminat inhärent, dass eine solche Folie, wenn sie gefaltet wird, diese Faltung nicht oder zumindest nicht vollständig behält, sondern versucht, ihren ursprünglichen, d.h. ungefalteten Zustand einzunehmen. Um bislang eine solche Faltung dauerhaft zu erreichen, sind aufwendige Maßnahmen notwendig, wie beispielsweise die Anwendung von Wärme, um den gefalteten Zustand, beispielsweise durch Siegeln, zu fixieren, wobei hier alternativ auch ein Verkleben in Frage kommt. Eine weitere Möglichkeit zur Fixierung einer einem bisher bekannten herkömmlichen Folienmaterial aufgezwungenen Faltung besteht beispielsweise auch im Verschließen einer, ein Füllgut umhüllenden Folienverpackung, wobei ein Kleber oder eine Siegelung verwendet wird, um zwei Folienenden, die in gegenläufige Richtungen ihre Rückstellkraft entfalten, miteinander zu verbinden und dadurch zu fixieren. Diese Maßnahme ist jedoch aufwendig, erfordert relativ viel und starken Klebstoff oder den Einsatz eines Siegelwerkzeugs. Des weiteren ist ein solches Verfahren auch deshalb aufwendig, da bis zu einer Fixierung der jeweiligen Folienenden die Form der gefalteten Folie durch Hilfsmaßnahmen aufrecht erhalten werden muss, um eine vorzeitige Rückstellung der Folie zu vermeiden, so dass ein ordnungsgemäßer Verschluss der Verpackung erfolgen kann.

Zur Lösung dieses Problems beschreibt die GB 2 036 683 A ein Folienmaterial, das aus einem biaxial gereckten Polyester besteht und zum Einwickeln von Bonbons geeignet ist. Das dortige Folienmaterial ist vollflächig mit einem polygonalen oder hexagonalen Muster versehen, das in die Oberfläche des dortigen Folienmaterials, das auch ein Polyethylenterephthalat sein kann, eingeprägt ist.

Ein Nachteil des in der GB 2 036 683 A beschriebenen Folienmaterials besteht jedoch darin, dass auf einem solchermaßen geprägten Folienmaterial kein schönes Druckbild erzeugt werden kann, da die dortige Folie aufgrund der Prägung keine glatte Oberfläche aufweist, so dass bei einem Bedrucken der dortigen Folie, beispielsweise in den Prägerillen, Farbverläufe stattfinden, so dass ein Bedrucken einer solchen geprägten Folie zu einem unschönen, verschwommenen und glanzlosen Druckbild führt.

Die nachveröffentlichte EP 2 360 099 A1 beschreibt ferner eine Herstellung eines mittels Laser bearbeiteten Folienmaterials gemäß dem Oberbegriff des Anspruchs 1, wobei das dortige Verfahren aufwendig und teuer ist.

Der Erfindung liegt die Aufgabe zugrunde, ein Folienmaterial zur Verfügung zu stellen, das zum Herstellen einer Verpackung geeignet ist und das in einfacher Weise entsprechend der gewünschten Verpackungsform gefaltet oder anderweitig verformt werden kann und in dieser gefalteten bzw. verformten Geometrie verbleibt, und das Folienmaterial darüber hinaus ein exzellentes und brillantes Druckbild hat, wobei die vorgenannten Probleme des Standes der Technik, insbesondere die aus der GB 2 036 683 A resultierenden Probleme vermieden werden können. Des Weiteren ist es die Aufgabe der Erfindung, ein Verfahren zum Herstellen eines solchen Folienmaterials sowie die Verwendung eines solchen Folienmaterials anzugeben.

Diese Aufgabe wird durch ein Folienmaterial nach Patentanspruch 1 sowie ferner durch ein Verfahren gemäß Patentanspruch 11 und eine Verwendung gemäß Patentanspruch 12 gelöst.

Insbesondere wird die Aufgabe durch ein Folienmaterial zur Herstellung einer Verpackung gelöst, wobei das Folienmaterial als bedruckte Folie oder als bedrucktes Laminat ausgebildet ist, das zumindest einen Funktionsbereich und zumindest einen Flächenbereich aufweist, wobei der zumindest eine Funktionsbereich mit einer reliefartig ausgebildeten, insbesondere wenigstens eine Vertiefung aufweisenden, Oberflächenstruktur versehen ist, die gegenüber einer Struktur des zumindest einen Flächenbereichs der Monofolie oder des Laminats strukturell, insbesondere mechanisch, geschwächt ist.

Ein wesentlicher Punkt der Erfindung liegt darin, dass das erfindungsgemäße Folienmaterial Funktionsbereiche einerseits sowie Flächenbereiche andererseits aufweist, wobei lediglich die Funktionsbereiche mit einer reliefartig ausgebildeten, insbesondere wenigstens eine Vertiefung aufweisenden Oberflächenstruktur versehen sind. Diese Funktionsbereiche weisen aufgrund gegenüber den Flächenbereichen andersartigen Oberflächenstruktur eine durch diese Oberflächenstruktur bedingte Schwächung auf, so dass das erfindungsgemäße Folienmaterial in bzw. entlang dieser Funktionsbereiche einfach verformt, beispielsweise gefaltet oder verdreht werden kann, so dass das Folienmaterial auf einfache Weise zu einer Verpackung geformt werden kann und das Folienmaterial die Form der Verpackung aufrecht erhält, ohne dass das Folienmaterial seine vorherige ursprüngliche Form wieder einnimmt. Diese Beibehaltung der Verpackungsform durch das erfindungsgemäße Folienmaterial ist dadurch bedingt, dass in den jeweiligen Verformungsbereichen, die notwendig sind, um die Verpackung geometrisch darzustellen, eine Schwächung der Monofolien- oder Laminatstruktur, nämlich in den jeweiligen Funktionsbereichen vorliegt. Diese Störung ist erfindungsgemäß die vorerwähnte reliefartig ausgebildete, insbesondere wenigstens eine Vertiefung aufweisende Oberflächenstruktur der Funktionsbereiche bedingt. Diese Störung der Oberflächenstruktur kann erfindungsgemäß sowohl einseitig auf der Monofolie oder dem bedruckten Laminat ausgebildet sein, oder aber, beispielsweise durch Prägen, über den gesamten Querschnitt der Monofolie oder des Laminats, nämlich in den jeweiligen Funktionsbereichen, ausgebildet sein.

Gemäß einer Ausführungsform der Erfindung ist die reliefartig ausgebildete Oberflächenstruktur nach einem Bedrucken der Monofolie oder des Laminats unter Ausbildung des zumindest einen Funktionsbereichs hergestellt. Auf diese Weise ist es möglich, die erfindungsgemäß eingesetzte Monofolie oder das erfindungsgemäß eingesetzte Laminat in glattem, relieffreiem Zustand zu bedrucken und auf diese Weise ein hervorragendes und brillantes Druckbild auf der Monofolie oder dem Laminat zu erzeugen, ohne dass, wie beim Stand der Technik zu befürchten ist, Druckfarben verlaufen und ein verschwommenes bzw. verwaschenes Druckbild ergeben. Gemäß einer weiteren, vorteilhaften Ausführungsform der Erfindung wird die erfindungsgemäß eingesetzte Monofolie oder das erfindungsgemäß eingesetzte Laminat auf der Rückseite der später reliefartig ausgebildete Vertiefungen aufweisenden Oberflächenstruktur des zumindest einen Funktionsbereichs bedruckt, so dass während der Ausbildung der reliefartig ausgebildeten Oberflächenstruktur durch Prägen und/oder durch Lasergravieren nicht zu befürchten ist, dass die Druckfarbe, die auf die Folie oder das Laminat aufgebracht ist, durch den Prägevorgang oder das Lasergravieren beschädigt wird. Auf diese Weise ist es möglich, Druckfarben einzusetzen, die beispielsweise kleine Feststoffe, wie Metallpigmente oder -flocken enthalten.

Somit besteht ein wesentlicher Vorteil der Erfindung darin, dass anhand des neuartigen Folienmaterials eine Verpackung erzeugt werden kann, die einerseits in flächigen Bereichen, nämlich in den jeweiligen Flächenbereichen, ein exzellentes und brillantes Druckbild aufweist, während das erfindungsgemäße Folienmaterial trotzdem, nämlich in den Funktionsbereichen leicht gefaltet oder verzwirbelt werden kann, um die Form des Folienmaterials in diejenige der gewünschten Verpackung zu bringen.

An dieser Stelle sei erwähnt, dass es erfindungsgemäß auch möglich ist, die Vorderseite der Monofolie oder des Laminats vor einer Ausbildung der reliefartigen Oberflächenstruktur zu bedrucken, sofern dies erwünscht ist. Ein solcher frontseitiger Druck im Gegensatz zu vorerwähntem rückseitigen oder Konterdruck kann erfindungsgemäß sowohl in Kombination als auch alternativ erfolgen und hängt im Wesentlichen von der eingesetzten Farbe sowie von den gewünschten Oberflächeneffekten ab. Diese Oberflächeneffekte können um so stärker gestaltet werden, je stärker die insbesondere frontseitig bedruckten Funktionsbereiche mit der reliefartigen Oberflächenstruktur versehen werden.

So ist es beispielsweise erfindungsgemäß möglich, die reliefartige Oberflächenstruktur mit wellenartigen Vertiefungen und Erhöhungen auszubilden, die entweder nur auf der Vorder- oder Rückseite des erfindungsgemäßen Folienmaterials vorgesehen sein können, oder aber sowohl auf der Vorder- und der Rückseite des Folienmaterials. Hierbei können die wellenartigen Vertiefung und Erhöhungen sowohl synchron auf der Vorder- und der Rückseite der Monofolie oder des Laminats vorliegen und gleiche oder annähernd gleiche Amplituden aufweisen. Ferner ist es möglich, dass diese wellenartigen Vertiefungen und Erhöhungen auf einer Seite dominant und auf der jeweiligen anderen Seite der Monofolie oder des Laminats in abgeschwächter Form vorliegen.

Des Weiteren kann die reliefartig ausgebildete Oberflächenstruktur auch winklige, insbesondere spitzwinklige, und/oder rechteckartige, respektive annähernd rechteckartige Vertiefungen und/oder Erhöhungen aufweisen, sofern dies gewünscht ist.

Im Übrigen weisen die Vertiefungen der reliefartig ausgebildeten Oberflächenstruktur erfindungsgemäß eine Tiefe, insbesondere eine Prägetiefe, auf, die im Bereich vom 5% bis 30%, bevorzugt im Bereich von 8% bis 25% und besonders bevorzugt im Bereich von 10% bis 20% bezogen auf eine Dicke des Flächenbereichs liegt. Diese Tiefe wird durch ein Abtasten der Prägeseite des erfindungsgemäßen Folienmaterials gemessen, wobei sich die Tiefe durch die Entfernung der tiefsten Stelle einer Vertiefung bis zur Ebene des Flächenbereichs ergibt.

Gemäß einer weiteren Ausführungsform der Erfindung kann die reliefartig ausgebildete Oberflächenstruktur, sofern diese durch Prägen hergestellt ist, gegenüber einer Dicke des Flächenbereichs des erfindungsgemäßen Folienmaterials auch eine um im Bereich von 5% bis 100 %, vorzugsweise um im Bereich von 10% bis 80% und besonders bevorzugt um im Bereich von 20% bis 75%, größere Dicke aufweisen. Diese Ausführungsform kommt insbesondere dann zum Tragen, wenn die reliefartig ausgebildete Oberflächenstruktur wellenartige Vertiefungen und Erhöhungen aufweist, die dazu führen, dass sich die gemäß DIN 53370 vom November 2006 gemessene Dicke der Funktionsbereiche von der Dicke der jeweiligen Flächenbereiche unterscheidet.

Erfindungsgemäß kann die reliefartig ausgebildete Oberflächenstruktur ein reguläres oder ein, aufgrund der Herstellung der reliefartig ausgebildeten Oberflächenstruktur mittels einer Prägemaschine, pseudo-unregelmäßiges Muster aufweisen. Als Muster kommen hierbei geradlinige oder gekrümmte Linienmuster, hexagonale oder orthogonale Muster, Rautenmuster, Trapezmuster, drei-, vier-, fünf-, sieben- oder acht- und mehreckige, leinenartige, sternartige, American Corn oder 45°-leinenartige Muster in Frage. Als unregelmäßige oder pseudo-unregelmäßige Muster können Linien und/oder vorgenannte Muster in unregelmäßiger Form in einer Mischung verwendet werden.

Die Erzeugung der reliefartig ausgebildeten Oberflächenstruktur, respektive der regulären oder unregelmäßigen bzw. pseudo-unregelmäßigen Muster kann erfindungsgemäß mittels einer Rollenprägung, jedoch auch mittels Flachprägung oder mittels Lasergravur erfolgen. Des weiteren kann der zumindest eine Funktionsbereich mit der reliefartig ausgebildeten Oberflächenstruktur unmittelbar nach dem Drucken noch auf einer eigens dafür ausgestatteten Druckmaschine erfolgen. Alternativ kann die Erzeugung der Oberflächenstruktur vor einem Schneiden von Breitbahnen auf Schmalbahnen oder alternativ hierzu auch in einem Offline-Verfahren, d.h. in einem separaten Arbeitsgang durchgeführt werden. Auch eine Erzeugung der reliefartig ausgebildeten Oberflächenstruktur unmittelbar vor einem Falten in einer Packmaschine, die entsprechend ausgerüstet ist, liegt im Umfang der Erfindung.

Des weiteren kann die Erzeugung der reliefartig ausgebildeten Oberflächenstruktur entweder einseitig im Funktionsbereich der Monofolie oder des Laminats durchgeführt werden, oder aber, beispielsweise wenn Prägeverfahren zum Einsatz kommen, zweiseitig ausgeführt sein, so dass sowohl die flächige Vorder- als auch die flächige Rückseite des Funktionsbereichs geprägt ist. Zu diesem Zweck können beispielsweise Prägewalzen eingesetzt werden, die ineinander eingreifende Auskragungen und Vertiefungen aufweisen, so dass die verwendete Monofolie oder das verwendete Laminat quasi durchgeprägt wird. Alternativ kann auch eine der beiden Prägefolien glatt mit einer mehr oder weniger nachgiebigen Oberfläche ausgebildet sein, so dass eine Prägung lediglich einseitig oder in entsprechend abgeschwächter Form auch auf der Rückseite der Folie ausgebildet wird.

Im Übrigen weist das erfindungsgemäße Folienmaterial eine oder mehrere der nachfolgend genannten Materialien auf: biaxial orientiertes Polypropylen, metallisiertes biaxial orientiertes Polypropylen, partiell metallisiertes biaxial orientiertes Polypropylen, gegossenes Polypropylen (CPP), geblasenes Polypropylen (BPP).

Erfindungsgemäß ist es bevorzugt, dass das Folienmaterial sortenrein ist, d.h., dass vorzugsweise beispielsweise lediglich Polyolefine, bevorzugt Polyethylen oder Polypropylen, oder aber Ester, wie beispielsweise Polyethylenterephthalat, verwendet werden, wobei diese Materialien biaxial oder monoaxial gereckt sein können. Die Verwendung von sortenreinen Kunststoffen ist sehr vorteilhaft im Hinblick auf eine Recyclebarkeit des erfindungsgemäßen Folienmaterials nach einer Benutzung, wobei eine monoaxiale Reckung des Folienmaterials zu einem erleichterten Öffnen einer aus diesem Material hergestellten Verpackung beitragen kann.

Des weiteren kann erfindungsgemäß auch eine vollflächig gefärbte Folie verwendet werden. Ein solcher Einsatz einer vollflächig gefärbten Folie ermöglicht bei einem Einsatz als Monofolie oder im Falle der Verwendung einer gefärbten Folie als Folienschicht in einem Laminat, völlig neuartige ästhetische Erscheinungsbilder, insbesondere dann, wenn der Funktionsbereich und/oder vorzugsweise zumindest ein Flächenbereich ferner eine Mikrostruktur und/oder eine Hologrammstruktur und/oder eine 3D-Struktur aufweist. Eine solche Mikrostruktur, Hologrammstruktur oder 3D-Struktur kann beispielsweise zur Prägung eines Logos, einer Marke oder eines Firmennamens verwendet werden. Auch zusätzliche optische Effekte können anhand einer solchen Mikro-, Hologramm- oder 3D-Struktur erzeugt werden.

An dieser Stelle sei erwähnt, dass neben einer vollflächig gefärbten Folie auch ein farbiger Kunststoff, respektive ein eingefärbter Kunststoff zum Herstellen einer solche vollflächig gefärbten Folie verwendet werden kann.

Im übrigen ist die Mikrostruktur und/oder die Hologrammstruktur und/oder die 3D-Struktur um einen Faktor im Bereich von 0,6 bis 70, vorzugsweise um einen Faktor im Bereich von 1 bis 60 und besonders bevorzugt um einen Faktor im Bereich von 1,25 bis 50, kleiner als die reliefartig ausgebildete Oberflächenstruktur, so dass die reliefartig ausgebildete Oberflächenstruktur nach Wunsch auch mit der Mikrostruktur und/oder der Hologrammstruktur und/oder der 3D-Struktur im Sinne einer Schmuckprägung überlagert werden kann, was wiederum einen besonderen optischen Eindruck vermittelt und zur Attraktivität des erfindungsgemäßen Folienmaterials beiträgt.

Des weiteren wird die erfindungsgemäße Aufgabe durch ein Verfahren zum Herstellen eines Folienmaterials zum Herstellen einer Verpackung gelöst, wobei folgende Schritte durchgeführt werden:
- zur Verfügung stellen einer Monofolie oder eines Laminats;
- Bedrucken der Monofolie oder des Laminats;
- Herstellen wenigstens eines Funktionsbereichs mit einer reliefartig ausgebildeten Vertiefungen aufweisenden Oberflächenstruktur auf wenigstens einer Fläche der bedruckten Monofolie oder des bedruckten Laminats.

Die Herstellung von Funktionsbereichen kann erfindungsgemäß gleichzeitig oder sukzessive erfolgen, wobei die Position der jeweiligen Funktionsbereiche an dem erfindungsgemäßen Folienmaterial in vorteilhafter Weise exakt definiert ist und beispielsweise mittels Start- und Stopmarkierungen exakt definiert sein kann, so dass beispielsweise Falt- oder Dreheinschlagbereiche eines geschnittenen und zur Herstellung der Verpackung vorbereiteten Folienmaterials exakt definiert sind. In vorteilhafter Weise können die Markierungen zur Erzeugung der jeweiligen Funktionsbereiche auch verwendet werden, um die Lage eines Druckbildes auf dem erfindungsgemäßen Folienmaterial exakt zu definieren.

Des weiteren sei an dieser Stelle erwähnt, dass eine erfindungsgemäß bedruckte und mit einer reliefartig ausgebildeten Oberflächenstruktur versehene Monofolie auch in ein Laminat eingebracht und mit einer oder zwei Laminatschichten verklebt sein kann. Es sei betont, dass auch diese Ausführungsform vom Schutzumfang der Erfindung umfasst ist, jedoch nur in speziellen Fällen zur Anwendung kommt.

Des weiteren wird die erfindungsgemäße Aufgabe auch durch die Verwendung eines Folienmaterials gemäß vorstehenden Ausführungen gelöst, wobei das Folienmaterial zum Herstellen einer Faltverpackung und/oder einer Dreheinschlagverpackung, insbesondere zur Verpackung von Bonbons oder Pralinés, und/oder einer Durchdrückverpackung verwendet wird.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung eines erfindungsgemäßen Folienmaterials;
- Fig. 2: eine schematische Darstellung einer aus einem erfindungsgemäßen Folienmaterial hergestellten Verpackung;
- Fig. 3: eine schematische Darstellung eines erfindungsgemäßen Folienmaterials gemäß einer weiteren Ausführungsform;
- Fig. 4: eine Darstellung einer aus einem Folienmaterial gemäß Fig. 3 hergestellten Dreheinschlagverpackung; und
- Fig. 5 bis 8: schematische Darstellungen unterschiedlich ausgebildeter reliefartiger Oberflächenstrukturen.

In der nachfolgenden Beschreibung werden für gleiche und gleich wirkende Teile dieselben Bezugsziffern verwendet.

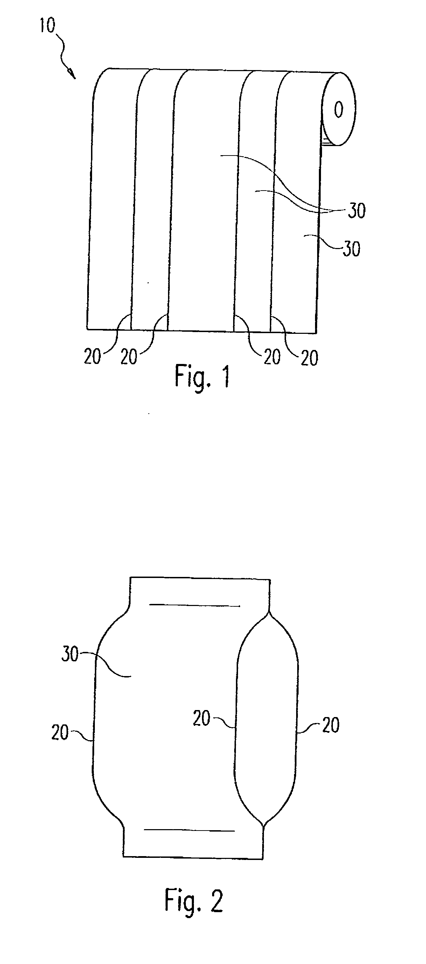

Fig. 1 zeigt ein erfindungsgemäßes Folienmaterial 10, das in schematischer Darstellung von einer Rolle abgewickelt wird. Das Folienmaterial 10 weist insgesamt vier linienförmig ausgebildete Funktionsbereiche 20 sowie zwischen diesen Funktionsbereichen 20 sowie außenseitig der jeweils äußeren Funktionsbereiche 20 angeordnete Flächenbereiche 30 auf.

Fig. 2 zeigt eine schematische Darstellung einer aus einem Folienmaterial 10 gemäß Fig. 1 hergestellten Verpackung, wobei verdeutlicht ist, dass die Faltkanten der Verpackung jeweils durch die linienförmig ausgebildeten Funktionsbereiche 20 des erfindungsgemäßen Folienmaterials 10 gebildet werden, während die Seitenfläche der Verpackung durch jeweilige Flächenbereiche 30 gebildet werden.

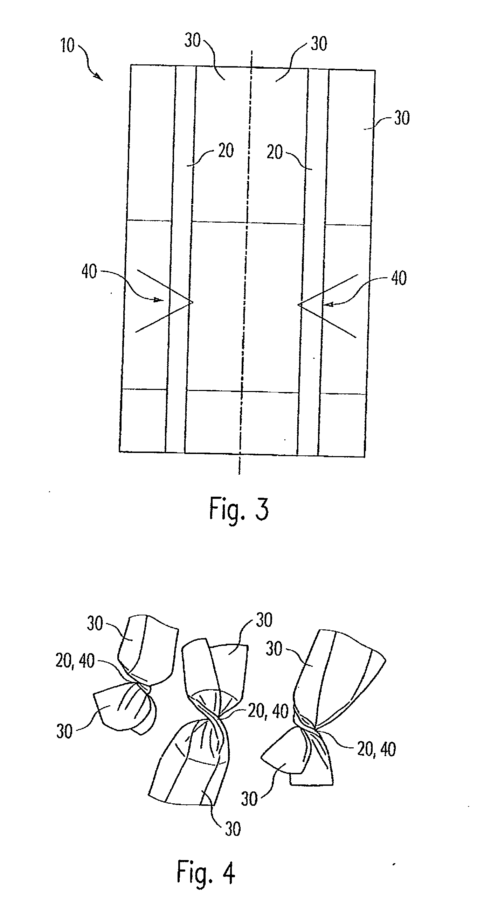

Fig. 3 zeigt eine weitere Ausführungsform eines erfindungsgemäßen Folienmaterials 10, bei welchem wiederum Flächenbereich 30 und diese Flächenbereiche 30 unterteilende bandförmige Funktionsbereiche 20 vorgesehen sind. Diese bandförmigen Funktionsbereiche 20 dienen dazu, eine Rückstellkraft des erfindungsgemäßen Folienmaterials in diesen Funktionsbereichen 20 zu verringern, so dass in diesen bandförmigen Funktionsbereichen ein Dreheinschlag zur Bildung einer Dreheinschlagverpackung möglich ist. Dies ist in Fig. 3 schematisch mit dem Bezugszeichen 40 dargestellt. Eine solche Dreheinschlagverpackung ist in Fig. 4 beispielhaft abgebildet, wobei die Dreheinschlagbereiche mit dem Bezugszeichen 40 gekennzeichnet sind. Diese decken sich gemäß Fig. 4 mit den eingedrehten Funktionsbereichen 20.

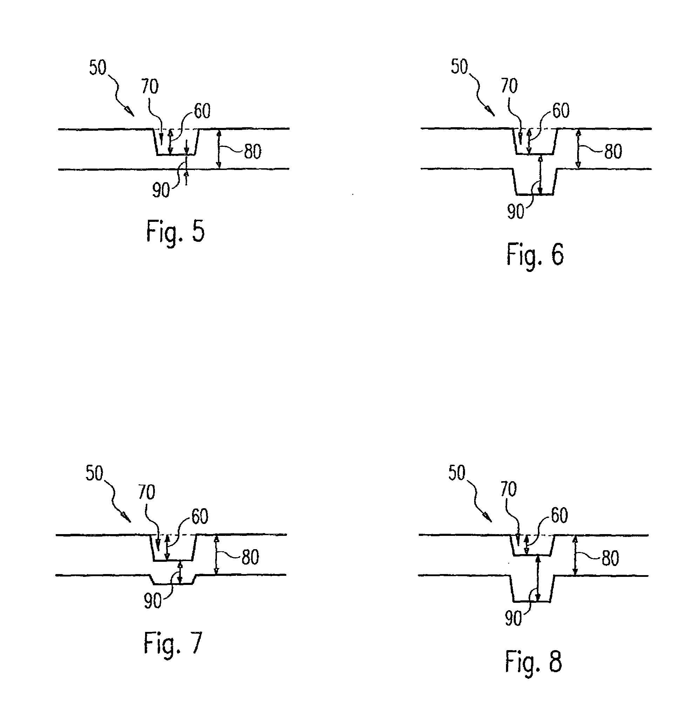

Die weiteren Figuren 5 bis 8 zeigen jeweils schematische Darstellungen erfindungsgemäß ausgebildeter reliefartiger Oberflächenstrukturen, wobei Fig. 5 eine Struktur zeigt, bei der eine Vertiefung 70 mit einer Prägetiefe 60 auf einer Oberflächenstruktur ausgebildet ist, während die der Oberflächenstruktur, respektive der Prägeseite gegenüberliegende Folienmaterialseite keine reliefartige Verformung aufweist, sondern plan verläuft. Die Folienmaterialdicke 90 unter der Vertiefung 70 ist gemäß Fig. 5 somit kleiner als die Dicke 80 des Flächenbereichs 30 ausgebildet.

Fig. 6 zeigt im Gegensatz zu Fig. 5 eine Ausführungsform einer erfindungsgemäßen reliefartig ausgebildeten Oberflächenstruktur, bei welcher die Prägeseite parallel mit der der Prägeseite gegenüberliegenden Seite des Folienmaterials 10 verläuft, so dass die Dicke 80 des Flächenbereichs 30 identisch oder nahezu identisch mit der Folienmaterialdicke 90 unter der Vertiefung 70 ist. Die Prägetiefe 60 ist gemäß Fig. 6 identisch mit der Prägetiefe 60 aus Fig. 5 ausgebildet.

Fig. 7 zeigt wiederum eine identisch tief ausgebildete Prägetiefe 60 in der Oberflächenstruktur 50, wobei durch die Prägetiefe 60 wiederum eine Vertiefung 70 definiert ist. Die der Prägeseite, respektive der Oberflächenstrukturseite 50 gegenüberliegende Seite ist gemäß Fig. 7 jedoch nicht in identischem Masse reliefartig verformt wie die Vertiefung 70 auf der Oberflächenstrukturseite 50, sondern schwächer. Dies bedeutet, dass die Folienmaterialdicke unter der Vertiefung 70 geringer ist als die Dicke 80 des Flächenbereichs 30.

Gemäß einer weiteren möglichen Variante, die in Fig. 8 dargestellt ist, kann das erfindungsgemäße Folienmaterial 10 auch eine Folienmaterialdicke 90 unter der Vertiefung 70 aufweisen, die größer als die Dicke 80 des Flächenbereichs 30 ausgebildet ist. Eine solche Ausführungsform kommt beispielsweise dann zustande, wenn das erfindungsgemäße Folienmaterial 10 auf der Oberflächenstruktur- bzw. Prägeseite 50 nach einem Prägevorgang wieder etwas "zurückfedert", was zu einer geringeren Prägetiefe 60 einer Vertiefung 70 führt.

Zusammenfassend kann somit festgehalten werden, dass es anhand des erfindungsgemäßen Folienmaterials möglich ist, Verpackungen exakt vorzufalten, so dass ein zu verpackender Gegenstand exakt umschlossen wird und lediglich noch ein Verschließen der Verpackung nötig ist. Da ein solches Verschließen bei einer Verwendung eines erfindungsgemäßen Folienmaterials nicht mehr einer Rückstellkraft einer herkömmlichen Folie entgegenwirken muss, kann erfindungsgemäß Kleber eingespart werden, was einen Kostenvorteil einerseits sowie bei einem Recycling andererseits Vorteile mit sich bringt. Darüber hinaus ist es erfindungsgemäß möglich, bereits bedruckte Standardfolien erfindungsgemäß zu modifizieren, so dass auch diese als Faltverpackung und/oder Dreheinschlagverpackung und/oder Durchdrückverpackung verwendbar sind.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen

- 10: Folienmaterial
- 20: Funktionsbereich
- 30: Flächenbereich
- 40: Dreheinschlagbereich
- 50: Oberflächenstruktur
- 60: Prägetiefe
- 70: Vertiefung
- 80: Dicke des Flächenbereichs
- 90: Folienmaterialdicke unter Vertiefung

## Patentansprüche

1. Folienmaterial (10) zur Herstellung einer Verpackung, wobei
das Folienmaterial (10) als bedruckte Monofolie oder als bedrucktes Laminat ausgebildet ist, das zumindest einen Falt- oder Dreheinschlagbereich (20) und zumindest einen Flächenbereich (30) aufweist, wobei der zumindest eine Falt- oder Dreheinschlagbereich (20) mit einer reliefartig ausgebildeten, wenigstens eine Vertiefung (70) aufweisenden Oberflächenstruktur (50) versehen ist, die gegenüber einer Struktur des zumindest einen Flächenbereichs (30) der Monofolie oder des Laminats durch Prägen strukturell geschwächt ist, **dadurch gekennzeichnet, dass** die Vertiefung(en) (70) eine Tiefe, insbesondere eine Prägetiefe, im Bereich von 5 % bis 30 %, bevorzugt im Bereich von 8 % bis 25 % und besonders bevorzugt im Bereich von 10 % bis 20 % bezogen auf eine Dicke (80) des Flächenbereichs (30) aufweisen.

2. Folienmaterial nach Anspruch 1,
**dadurch gekennzeichnet, dass**
die reliefartig ausgebildete Oberflächenstruktur (50) nach einem Bedrucken der Monofolie oder des Laminats unter Ausbildung des zumindest einen Falt- oder Dreheinschlagbereichs (20) hergestellt ist.

3. Folienmaterial nach einem der vorhergehenden Ansprüche,
**dadurch gekennzeichnet, dass**
die reliefartig ausgebildete Oberflächenstruktur (50) wellenartige und/oder winklige, insbesondere spitzwinklige, und/oder rechteckartige Vertiefungen (70) und/oder Erhöhungen aufweist.

4. Folienmaterial nach einem der vorhergehenden Ansprüche,
**dadurch gekennzeichnet, dass**
die reliefartig ausgebildete Oberflächenstruktur (50) ein reguläres oder pseudo-unregelmäßiges Muster aufweist.

5. Folienmaterial nach einem der vorhergehenden Ansprüche,
**dadurch gekennzeichnet, dass**
das Folienmaterial (10) eines oder mehrere der nachfolgend genannten Materialien aufweist: biaxial orientiertes Polypropylen, metallisiertes biaxial orientiertes Polypropylen, partiell metallisiertes biaxial orientiertes Polypropylen, gegossenes Polypropylen (CPP), geblasenes Polypropylen (BPP).

6. Folienmaterial nach einem der vorhergehenden Ansprüche,
**dadurch gekennzeichnet, dass**
das Folienmaterial (10) eine, insbesondere vollflächig, gefärbte Folie umfasst.

7. Folienmaterial nach einem der vorhergehenden Ansprüche,
**dadurch gekennzeichnet, dass**
der Falt- oder Dreheinschlagbereich (20) und/oder vorzugsweise zumindest ein Flächenbereich (30) eine Mikrostruktur und/oder eine Hologrammstruktur und/oder eine 3D-Struktur aufweist.

8. Folienmaterial nach Anspruch 7,
**dadurch gekennzeichnet, dass**
die Mikrostruktur und/oder die Hologrammstruktur und/oder die 3D-Struktur um einen Faktor im Bereich von 0,6 bis 70, vorzugsweise um einen Faktor im Bereich von 1 bis 60 und besonders bevorzugt um einen Faktor im Bereich von 1,25 bis 50, kleiner als die reliefartig ausgebildete Oberflächenstruktur (50) ist.

9. Folienmaterial nach einem der vorhergehenden Ansprüche,
**dadurch gekennzeichnet, dass**
die Rückseite der reliefartig ausgebildeten Vertiefungen (70) aufweisenden Oberflächenstruktur (50) des zumindest einen Falt- oder Dreheinschlagbereichs (20) bedruckt ist.

10. Folienmaterial nach einem der vorhergehenden Ansprüche,
**dadurch gekennzeichnet, dass**
der zumindest eine Falt- oder Dreheinschlagbereich (20) auf beiden flächigen Seiten der Monofolie oder des Laminats die reliefartig ausgebildete Vertiefungen (70) aufweisende Oberflächenstruktur (50) aufweist.

11. Verfahren zum Herstellen eines Folienmaterials zum Herstellen einer Verpackung,
**gekennzeichnet durch**
eine Durchführung folgender Schritte:
- zur Verfügung stellen einer Monofolie oder eines Laminats;
- Bedrucken der Monofolie oder des Laminats;
- Herstellen wenigstens eines Falt- oder Dreheinschlagbereichs (20) mit einer reliefartig ausgebildeten Vertiefungen (70) aufweisenden Oberflächenstruktur (50) auf wenigstens einer Fläche der bedruckten Monofolie oder des bedruckten Laminats **durch** Prägen.

12. Verwendung eines Folienmaterials gemäß einem der Ansprüche 1 bis 10 zum Herstellen einer Faltverpackung und/oder einer Dreheinschlagverpackung, insbesondere zur Verpackung von Bonbons oder Pralinés, und/oder einer Durchdrückverpackung.

## Claims

1. Film material (10) for producing packaging, wherein the film material (10) is designed as a printed monofilm or printed laminate having at least one end-fold or twist wrap region (20) and at least one flat region (30), wherein the at least one end-fold or twist wrap region (20) is provided with a relief-like surface structure (50) having at least one recess (70) which, with respect to a structure of the at least one flat region (30) of the monofilm or laminate, is structurally weakened by embossing, **characterised in that** the recess(es) (70) have a depth, in particular an embossing depth, ranging from 5% to 30%, preferably ranging from 8% to 25% and particularly preferably ranging from 10% to 20% with respect to a thickness (80) of the flat region (30).

2. Film material according to claim 1,
**characterised in that**
the relief-like surface structure (50) is manufactured after printing of the monofilm or laminate during forming of the at least one end-fold or twist wrap region (20).

3. Film material according to one of the preceding claims,
**characterised in that**
the relief-like surface structure (50) has wavy and/or angular, in particular acutely angular, and/or rectangular recesses (70) and/or elevations.

4. Film material according to one of the preceding claims,
**characterised in that**
the relief-like surface structure (50) has a regular or pseudo-irregular pattern.

5. Film material according to one of the preceding claims,
**characterised in that**
the film material (10) comprises one or a plurality of the following materials: biaxially oriented polypropylene, metallised biaxially oriented polypropylene, partially metallised biaxially oriented polypropylene, cast polypropylene (CPP), blown polypropylene (BPP).

6. Film material according to one of the preceding claims,
**characterised in that**
the film material (10) comprises a coloured film, especially an all-over coloured film.

7. Film material according to one of the preceding claims,
**characterised in that**
the end-fold or twist wrap region (20) and/or preferably at least one flat region (30) comprises a microstructure and/or a hologram structure and/or a 3D structure.

8. Film material according to claim 7,
**characterised in that**
the microstructure and/or the hologram structure and/or the 3D structure is smaller than the relief-like surface structure (50) by a factor ranging from 0.6 to 70, preferably by a factor ranging from 1 to 60 and particularly preferably by a factor ranging from 1.25 to 50.

9. Film material according to one of the preceding claims,
**characterised in that**
the back of surface structure (50) of the at least one end-fold or twist wrap region (20), which comprises the relief-like recesses (70), is printed.

10. Film material according to one of the preceding claims,
**characterised in that**
the at least one end-fold or twist wrap region (20) on both flat sides of the monofilm or laminate comprises the surface structure (50) having relief-like recesses (70).

11. Method for producing a film material for producing packaging,
**characterised by**
performance of the following steps:
- provision of a monofilm or a laminate;
- printing of the monofilm or the laminate;
- production of at least one end-fold or twist wrap region (20), comprising a surface structure (50) having relief-like recesses (70) on at least one surface of said printed monofilm or said printed laminate, by means of embossing.

12. Use of a film material according to one of claims 1 to 10 for producing a folding package and/or a twist wrap package, in particular for packaging sweets or pralines, and/or a blister pack.

## Revendications

1. Matériau en feuille (10) pour la fabrication d'un emballage, sachant que le matériau en feuille (10) est constitué comme feuille monocouche imprimée ou comme stratifié imprimé présentant au moins une zone d'enveloppage plié ou enroulé (20) et au moins une zone surfacique (30), sachant que l'au moins une zone d'enveloppage plié ou enroulé (20) est pourvue d'une structure superficielle (50) constituée en relief présentant au moins un enfoncement (70) et qui est structurellement affaiblie par estampage par rapport à une structure de l'au moins une zone surfacique (30) de la feuille monocouche ou du stratifié, **caractérisé en ce que** le (les) enfoncement(s) (70) présente(nt) une profondeur, en particulier une profondeur d'estampage, de l'ordre de 5 % à 30 %, de préférence de l'ordre de 8 % à 25 % et de manière particulièrement préférentielle de l'ordre de 10 % à 20 % par rapport à une épaisseur (80) de la zone surfacique (30).

2. Matériau en feuille selon la revendication 1,
**caractérisé en ce que**
la structure superficielle (50) constituée en relief est fabriquée après une impression de la feuille monocouche ou du stratifié tout en constituant l'au moins une zone d'enveloppage plié ou enroulé (20).

3. Matériau en feuille selon l'une des revendications précédentes,
**caractérisé en ce que**
la structure superficielle (50) constituée en relief présente des enfoncements (70) et/ou des élévations de type ondulé et/ou angulaires, en particulier à angles aigus, et/ou de type rectangulaire.

4. Matériau en feuille selon l'une des revendications précédentes,
**caractérisé en ce que**
la structure superficielle (50) constituée en relief présente un motif régulier ou pseudo-irrégulier.

5. Matériau en feuille selon l'une des revendications précédentes,
**caractérisé en ce que**
le matériau en feuille (10) présente un ou plusieurs des matériaux cités ci-après : polypropylène à orientation biaxiale, polypropylène métallisé à orientation biaxiale, polypropylène partiellement métallisé à orientation biaxiale, polypropylène moulé (CPP), polypropylène soufflé (BPP).

6. Matériau en feuille selon l'une des revendications précédentes,
**caractérisé en ce que**
le matériau en feuille (10) comprend une feuille colorée, en particulier sur toute la surface.

7. Matériau en feuille selon l'une des revendications précédentes,
**caractérisé en ce que**
la zone d'enveloppage plié ou enroulé (20) et/ou de préférence au moins une zone surfacique (30) présentent une microstructure et/ou une structure d'hologramme et/ou une structure en 3D.

8. Matériau en feuille selon la revendication 7,
**caractérisé en ce que**
la microstructure et/ou la structure d'hologramme et/ou la structure en 3D est plus petite d'un facteur de l'ordre de 0,6 à 70, de préférence d'un facteur de l'ordre de 1 à 60 et de façon particulièrement préférentielle d'un facteur de l'ordre de 1,25 à 50 que la structure superficielle (50) constituée en relief.

9. Matériau en feuille selon l'une des revendications précédentes,
**caractérisé en ce que**
la face arrière de la structure superficielle (50) présentant des enfoncements (70) constitués en relief de l'au moins une zone d'enveloppage plié ou enroulé (20) est imprimée.

10. Matériau en feuille selon l'une des revendications précédentes,
**caractérisé en ce que**
l'au moins une zone d'enveloppage plié ou enroulé (20) présente des deux côtés surfaciques de la feuille monocouche ou du stratifié la structure superficielle (50) présentant des enfoncements (70) constitués en relief.

11. Procédé de fabrication d'un matériau en feuille pour la fabrication d'un emballage,
**caractérisé par**
une exécution des étapes suivantes :
- mise à disposition d'une feuille monocouche ou d'un stratifié ;
- impression de la feuille monocouche ou du stratifié ;
- fabrication par estampage d'au moins une zone d'enveloppage plié ou enroulé (20) avec une structure superficielle (50) présentant des enfoncements (70) constitués en relief sur au moins une face de la feuille monocouche imprimée ou du stratifié imprimé.

12. Utilisation d'un matériau en feuille selon l'une des revendications 1 à 10 pour la fabrication d'un emballage plié et/ou d'un emballage à enveloppage enroulé, en particulier pour l'emballage de bonbons ou de pralinés, et/ou d'un emballage à déchirement par pression.
